# EUROPEAN PATENT APPLICATION

(11) **EP 4 715 750 A1**
(43) Date of publication of application: **25.03.2026**
(21) Application number: 25202578.8
(22) Date of filing: 16.09.2025
(51) Int. Cl.: G06T 17/20

(54) **3D DENTAL SCANNING SYSTEM AND METHOD WITH ADAPTIVE RESOLUTION**

(30) Priority: 19.09.2024 EP 24201331
(71) Applicant: 3Shape A/S, 1060 Copenhagen K (DK)
(72) Inventor: MISZTAL, Marek Krzysztof, 1060 Copenhagen K (DK)
(74) Representative: Zacco Denmark A/S

(57) **Abstract**

The present disclosure relates to a computer-implemented method for generating a digital 3D representation of a dental object, the method comprising the steps of: obtaining one or more 2D image(s) of the object; generating, based on the one or more 2D image(s), point cloud data, wherein the point cloud data comprises multiple points representing surface points of the object; and generating, based on the point cloud data, mesh data comprising multiple polygons representing the surface of the object. The step of generating mesh data comprises: obtaining geometric information based on the one or more 2D image(s), wherein the geometric information is indicative of a rate of change of one or more surface characteristic(s) in multiple surface sections of the object; determining a mesh resolution for each surface section based on the geometric information; and generating a mesh for each surface section with resolution determined for the respective surface section.

## Description

### Technical field

The disclosure relates to a computer-implemented method for generating a digital 3D representation of a dental object. The disclosure further relates to a scanning system for generating a digital 3D representation of a dental object.

### Background

The field of digital dentistry has undergone significant advancements since its conception four decades ago. Driven largely by advancements in CAD/CAM technology digital dentistry has revolutionized the fabrication of dental restorations. Where traditional methods required multiple visits and manual impressions, which could be uncomfortable for patients and prone to inaccuracies. Digital impressions taken with intraoral scanners eliminate the need for physical molds, providing highly accurate 3D representations of the patient's oral cavity. These digital models can be used to design and manufacture crowns, bridges, veneers, and other restorations with a high degree of precision and in a significantly reduced timeframe.

Despite these advancements, challenges remain in improving the workflow of the scanning process itself. For many dental procedures, current scanning systems are capable of providing 3D representations of much greater resolutions than what is needed. Rendering the 3D representation in high resolution requires additional processing power and prolongs the processing process. To overcome this, some of the current scanning systems has manually selected lower resolution modes where the 3D representation is generated at a lower resolution to improve the processing time.

For procedures such as replacements for missing or damaged teeth, a high resolution is however necessary to ensure that the dental prosthetics created from the 3D representation has an exterior surface that accurately match the patient's other teeth and an interior surface that match the preparation site or implant the dental prosthetics is to be attached onto. For these procedures the dental practitioner will have to manually select a higher resolution mode where the 3D representation is generated at a higher resolution at the cost of increased processing time.

At a higher resolution mode, it is however not just the dental site of interest that is resolved in high resolution but the entire scanned volume. While this ensures that important features are resolved properly, generating a high-resolution mesh of all scanned features is somewhat of an overkill. Afterall, for a somewhat flat surface, such as parts of the gingiva or the front of the incisors, a mesh made of many polygons will not produce a more accurate representation than one made of fewer polygons. Some of the processing power used to generate a high-resolution mesh is thus used superfluously as not all sections of a scan need to be in high resolution.

There is thus a need to improve the scanning workflow and optimize the use of processing power in the scanning system.

### Summary

The present invention seeks to address these challenges by the following.

A first aspect of the present disclosure is a computer-implemented method for generating a digital 3D representation of a dental object. The method comprises the step of obtaining one or more sets of 2D images of the object. The method comprises the step of generating, based on the one or more sets of 2D images, point cloud data, wherein the point cloud data comprises multiple points representing a volume of the object. The method comprises the step of generating, based on the point cloud data, mesh data comprising multiple polygons representing the surface of the object. The step of generating mesh data comprises obtaining geometric information for multiple surface sections of the object based on the one or more sets of 2D images, wherein the geometric information is indicative of a rate of change of one or more surface characteristic(s) in the respective surface sections. The step of generating mesh data comprises determining a mesh resolution for each surface section based on the geometric information of the respective surface section. The step of generating mesh data comprises generating a mesh for each surface section, wherein the mesh of each surface section comprises a number of the multiple polygons corresponding to the mesh resolution determined for the respective surface section.

A second aspect of the present disclosure is a computer program product comprising instructions which, when the program is executed by a computer, causes the computer to carry out the method of the first aspect.

A third aspect of the present disclosure is a non-transitory computer readable medium comprising instructions which, when executed by a computer, cause the computer to carry out the method of the first aspect.

A fourth aspect of the present disclosure is a scanning system for generating a digital 3D representation of a dental object. The system comprises one or more projector units configured for projecting light onto the object. The system comprises one or more camera units configured for obtaining one or more sets of 2D images of the object. The system comprises one or more processor(s). The processor(s) are configured for generating, based on the one or more sets of 2D images, point cloud data, wherein the point cloud data comprises multiple points representing a volume of the object. The processor(s) are configured for generating, based on the point cloud data, mesh data comprising multiple polygons representing the surface of the object. When generating mesh data, the processor(s) are further configured for obtaining geometric information for multiple surface sections of the object based on the one or more sets of 2D images, wherein the geometric information is indicative of a rate of change of one or more surface characteristic(s) in the respective surface sections. When generating mesh data, the processor(s) are further configured for determining a mesh resolution for each surface section based on the geometric information of the respective surface section. When generating mesh data, the processor(s) are further configured for generating a mesh for each surface section, wherein the mesh of each surface section comprises a number of the multiple polygons corresponding to the mesh resolution determined for the respective surface section.

For all these aspects, an advantage is that the resolution of the 3D representation is adaptive and chosen based on a rate of change of one or more surface characteristics in the various surface sections. If for example a particular surface section has a lot of sharp features, a higher resolution will be selected for that section so that these features will be more accurately resolved in the final 3D representation. If on the other hand, a section is relatively flat, a lower resolution will be selected so that processing power is not needlessly spent on generating a high resolution mesh for a section that can make do with a lower resolution.

Another advantage is that where the user, i.e. the dental practitioner had to manually select a resolution mode before, depending on their need for a particular dental procedure, the resolution required to accurately represent the various surface section will now be automatically determined or them, thereby improving the scanning workflow.

### Brief description of the drawings

The above and other features and advantages of the present invention will become readily apparent to those skilled in the art by the following detailed description of exemplary embodiments thereof with reference to the attached drawings, in which:
FIG. 1a shows an intraoral scanner used in the scanning system or method of the invention;
FIG. 1b shows an intraoral scanner used in the scanning system or method of the invention;
FIG. 2 shows a lab scanner used in the scanning system or method of the invention;
FIG. 3 shows box diagram of a scanning system of the invention;
FIG. 4 shows box diagram of a scanning system of the invention;
FIG. 5 illustrates a scanning session using a scanning system of the invention;
FIG. 6 illustrates a scanning session using a scanning system of the invention;
FIG. 7 shows point cloud data;
FIG. 8 shows a 3D representation comprising a 3D mesh;
FIG. 9a shows an example of a mesh;
FIG. 9b shows an example of a mesh;
FIG. 9c shows an example of a mesh;
FIG. 9d shows an example of a mesh;
FIG. 10a shows a 3D representation comprising a mesh data;
FIG. 10b shows an enlarged part of a 3D representation comprising a 3D mesh;
FIG. 10c shows an enlarged part of a 3D representation comprising a 3D mesh;
FIG. 11 shows a 3D representation comprising a 3D mesh;
FIG. 12 shows an initial 3D mesh;
FIG. 13 shows a flowchart of a method of the invention;
FIG. 14a shows a 3D representation comprising a mesh data; and
FIG. 14b shows a 3D representation comprising a mesh data.

### Detailed description

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the devices, systems, mediums, programs and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

Disclosed is a computer-implemented method for generating a digital 3D representation of a dental object, the method comprising the steps of:
- obtaining one or more 2D image(s) of the object;
- generating, based on the one or more 2D image(s), point cloud data, wherein the point cloud data comprises multiple points representing surface points of the object; and
- generating, based on the point cloud data, the 3D representation comprising mesh data having multiple polygons representing the surface of the object.
wherein the step of generating mesh data comprises:
o obtaining geometric information based on the one or more 2D image(s), wherein the geometric information is indicative of a rate of change of one or more surface characteristic(s) in multiple surface sections of the object.
o determining a mesh resolution for each surface section based on the geometric information.
o generating a mesh for each surface section with resolution determined for the respective surface section.

By dividing the 3D representation into subsections representing respective surface sections of the dental object, the mesh may be generated at a mesh resolution determined to be suitable for representing the respective surface sections of the dental object. **The** mesh may thus accurately represent the surface of the object without requiring excessive processing power of the scanning system. The mesh may thus be generated quicker, saving time for the user and patient and increasing the user experience.

At least part of the geometric information relating to a respective surface section may be based on a distribution of the points of the point cloud data corresponding to that surface section. At least part of the geometric information relating to a respective surface section may be based on performing raytracing on light reflected at the points of the point cloud data corresponding to that surface section. The geometric information may comprise information indicative of a rate of change of a contour in the surface sections. Surface point distribution and/or raytracing may both be used to obtain geometric information on the contour of the object, i.e. the shape of the surface of the object. The geometric information may then in turn be used to determine which mesh resolution is required to generate a mesh accurately representing various surface sections of the object. The resulting mesh may thus have a high mesh resolution in subsections representing surface sections with a lot of variation in their shape and have a low mesh resolution in subsections representing surface sections which are relatively flat.

At least part of the geometric information relating to a respective surface section may be based on color data corresponding to that surface section. The geometric information may comprise information indicative of a rate of change of color in the surface sections. Basing the geometric information on color data from the 2D images will allow for the provision of geometric data which is indicative of the color variation of the surface of the object. This may in turn be used to determine the mesh resolution needed to accurately represent the color variation in the various surface sections of the object.

The step of obtaining one or more 2D images of the object comprises obtaining multiple 2D images of the object. The step of generating point cloud data may comprise solving a correspondence problem to ascertain which parts of a first image of the multiple 2D images correspond to which parts of second image of the multiple 2D images. The step of generating point cloud data comprises registering points of the multiple points obtained from each respective 2D image into a common coordinate system.

The step of generating mesh data comprises assigning a color value to each polygon based on the one or more 2D image(s). This has the advantage that the 3D representation may represent not only the shape of the object but also the color. This may allow for a more detailed diagnostic when the user inspects the 3D representation and also allow for prosthetics made based on the 3D representation to be color matched to adjacent teeth.

The step of obtaining one or more 2D image(s) comprises projecting light onto the dental object. The light may be projected in a pattern. The projected pattern may be time static or it may be time variable. By projecting light in a pattern, it may be easier to solve the correspondence problem when multiple 2D images taken at different times and/or viewpoints are used, i.e. the pattern features may be used to identify which parts of one 2D image correspond to parts of another 2D image.

The step of obtaining one or more 2D image(s) of the object may be performed with an intraoral scanner. Intraoral scanners are advantageous as they allow the user, e.g. dentist or dental technician, to create a digital 3D representation of the user's tooth/teeth quickly and accurately without the need for taking a physical dental impression which is uncomfortable for the patient.

The step of obtaining one or more 2D image(s) of the object may be performed with a lab scanner. While intraoral scanners are the quicker and more comfortable method for obtaining the 2D image(s) of the dental object, not all dental clinics have access to them. Using a lab scanner to acquire 2D images of an imprint of a patient's dentition may thus be a cost efficient way of generating a digital 3D representation for users without access to intraoral scanners.

The step of generating point cloud data may comprise performing a first transformation to generate a dataset of coordinates of at least part of the object in a scanning-device-coordinate-system. The step of generating point cloud data may comprise performing a second transformation on the dataset of coordinates of at least part of the object in a scanning-device-coordinate-system to generate at least part of point cloud data in a real-world-coordinate-system.

The step of generating mesh data may further comprise generating an initial mesh based on the point cloud data, wherein the initial mesh comprises multiple initial polygons. The step of generating mesh data is based on the initial mesh.

The step of obtaining geometric information for a surface section may comprise comparing normal vectors of adjacent initial polygons within a surface section to obtain information on a rate of change in contour of the surface section.

### Dental object

While the dental object is referred to in singular, the dental object may be a group of dental features of a subject's, i.e. patient's, mouth, such as a group of teeth and their encircling gingiva. Examples of dental objects include any one or more of: tooth/teeth, gingiva, implant(s), dental restoration(s), dental prostheses, edentulous ridge(s), and/or combinations thereof. Alternatively, the dental object may be a gypsum model or a plastic model representing a subject's teeth. As an example, the dental object may comprise teeth and/or gingiva of a subject. The dental object may only be a part of the subject's teeth and/or oral cavity, since the entire set of teeth of the subject is not necessarily scanned during a scanning session. A scanning session may be understood herein as a period of time during which data (such as 2D images) of the dental object is acquired/obtained.

### Scanning device

The scanning device disclosed herein may be an intraoral scanning device for acquiring images within an intraoral cavity of a subject. The intraoral scanning device is a handheld scanning device, i.e. a device configured to be held with a human hand. Alternatively, the scanning device may be a stationary dental scanner, also referred to as a lab scanner, for acquiring images of a gypsum model or a plastic model representing a subject's teeth. The scanning device may employ any suitable scanning principle such as triangulation-based scanning, stereo vision, structure from motion, confocal scanning, or other scanning principles.

In some embodiments, the scanning device employs a triangulation-based scanning principle. As an example, a projector unit and one or more camera units may be utilized to determine points in 3D space based on triangulation. In other embodiments, the scanning device employs a focus-based scanning principle. A focus scanning device is further described in EP 2 442 720 B1 by the same applicant, which is incorporated herein in its entirety.

### Projector unit

A projector unit may be understood herein as a device configured for projecting light onto a surface, such as the surface of a dental object. In preferred embodiments, the projector unit is configured to project a pattern of light onto the surface of a dental object. The projector unit may be configured to project a pattern of light such that the pattern of light is in focus at a predefined focus distance measured along a projector optical axis.

Each projector unit may comprise one or more light sources. The projector unit may be configured to project a pattern of light defined by a plurality of projector rays when the light source(s) are on/active. The light source(s) may be configured to generate light of a single wavelength, a distribution, e.g. a Poisson distribution, of wavelengths, or a combination of wavelengths (mono- or polychromatic). The combination of wavelengths may be produced by a light source configured to produce light comprising different wavelengths (such as white light).

In some embodiments, each projector unit comprises a light source for generating white light. Alternatively, the projector unit may comprise multiple light sources such as LEDs individually producing light of different wavelengths (such as red, green, and blue) that may be combined to form light comprising different wavelengths. Thus, the light produced by the light source(s) may be defined by a wavelength defining a specific color, or a range of different wavelengths defining a combination of colors such as white light. In some embodiments, the light source is a diode, such as a white light diode, or a laser diode.

In some embodiments, the scanning device comprises a light source configured for exciting fluorescent material to obtain fluorescence data from the dental object such as from teeth. Such a light source may be configured to produce a narrow range of wavelengths. In other embodiments, the scanning device comprises an infrared light source, which is configured to generate wavelengths in the infrared range, such as between 700 nm and 1.5 µm. In some embodiments, the scanning device comprises one or more light sources selected from the group of: Infrared (IR) light source, near-infrared (NIR) light source, blue light source, violet light source, ultraviolet (UV) light source, and/or combinations thereof. In some embodiments, the scanning device comprises a first light source forming part of the projector unit, and one or more second light sources, e.g. IR-LED(s) and/or UV-LED(s), located in a distal part of the scanning device, such as in the tip of the scanning device.

The projector unit may comprise Digital Light Processing (DLP) projectors using a micro mirror array for generating a time varying pattern, or a diffractive optical element (DOF), or front-lit reflective mask projectors, or micro-LED projectors, or Liquid crystal on silicon (LCoS) projectors or back-lit mask projectors, wherein a light source is placed behind a mask having a spatial pattern, whereby the light projected on the surface of the dental object is patterned. The pattern may be dynamic, i.e. such that the pattern changes over time, or the pattern may be static in time, i.e. such that the pattern remains the same over time. The projector unit may comprise one or more collimation lenses for collimating the light from the light source. The collimation lens(es) may be placed between the light source and the mask. The projector unit may further comprise one or more focus lenses, or lens elements, configured for focusing the light at a predefined focus distance.

In some embodiments, the projector unit of the scanning device comprises at least one light source and a pattern generating element for defining a pattern of light. The pattern generating element is preferably configured for generating a light pattern to be projected on a surface of a dental object. As an example, the pattern generating element may be a mask having a spatial pattern. Hence, the projector unit may comprise a mask configured to define a pattern of light. The mask may be placed between the light source of the projector unit and the one or more focus lenses, such that light transmitted through the mask is patterned into a light pattern. As an example, the mask may define a polygonal pattern comprising a plurality of polygons, such as a checkerboard pattern. The projector unit may further comprise one or more lenses such as collimation lenses or projection lenses. In other embodiments, the pattern generating element is based on diffraction and/or refraction to generate the light pattern, such as a pattern comprising an array of discrete unconnected dots.

The pattern generating element may be a mask, such as a transparency or transmission mask, having a spatial pattern. In other embodiments, the pattern generating element is configured to utilize diffraction and/or refraction to generate a light pattern.

The spatial pattern may be a polygonal pattern comprising a plurality of polygons. The polygons may be selected from the group of: triangles, rectangles, squares, pentagons, hexagons, and/or combinations thereof. Other polygons can also be envisioned. In general, the polygons are composed of edges and corners. In some embodiments, the polygons are repeated in the pattern in a predefined manner. As an example, the pattern may comprise a plurality of repeating units, wherein each repeating unit comprises a predefined number of polygons, wherein the repeating units are repeated throughout the pattern. Alternatively, the pattern may comprise a predefined arrangement comprising any of stripes, squares, dots, triangles, rectangles, and/or combinations thereof. In some embodiments, the pattern is non-coded, such that no part of the pattern is unique.

In some embodiments, the generated pattern of light is a polygonal pattern, such as a checkerboard pattern comprising a plurality of checkers. Similar to a common checkerboard, the checkers in the pattern may have alternating dark and bright areas corresponding to areas of low light intensity (dark) and areas of high(er) light intensity (bright). In some embodiments the pattern of light is a checkerboard pattern comprising alternating squares of dark and bright. In some embodiments, the light pattern comprises a distribution of discrete unconnected spots of light.

The pattern preferably comprises a plurality of pattern features. The pattern may be a high-density pattern, which may be understood as a pattern comprising more than 3000 pattern features. However, the presently disclosed system and method is not limited to high-density patterns, since it works equally well for patterns of lower density. In some embodiments, the pattern comprises at least 1000 pattern features, or at least 3000 pattern features, or at least 10000 pattern features. When projecting a pattern comprising pattern features onto a surface of the 3D object, the acquired images of the object will similarly comprise a plurality of image features corresponding to the pattern features. A pattern/image feature may be understood as an individual well-defined location in the pattern/image. Examples of image/pattern features include corners, edges, vertices, points, transitions, dots, stripes, etc. In some embodiments, the image/pattern features comprise the corners of checkers in a checkerboard pattern. In other embodiments, the image/pattern features comprise corners in a polygon pattern such as a triangular pattern.

The projector unit may be configured to generate a predefined static pattern, which may be projected onto a surface of an object. An advantage of using a static pattern is that it enables the ability to capture all image data simultaneously, thus preventing warping due to movement. Another advantage is that a static pattern makes it possible to acquire only one image per camera unit in the set of images, thereby reducing power consumption e.g. of the light source.

Alternatively, the projector unit may be configured to generate a dynamic pattern, which changes in time. The projector unit may be associated with its own projector plane, which is determined by the projector optics. As an example, if the projector unit is a back-lit mask projector, the projector plane may be understood as the plane wherein the mask is contained. The projector plane comprises a plurality of pattern features of the projected pattern. Preferably, the camera units and projector unit are arranged such that the image sensors and the projector plane, e.g. defined by the mask, are in the same plane.

The projector unit may define a projector optical axis. An optical axis may be understood as a line along which there is some degree of rotational symmetry in an optical system such as a camera lens or a projector unit. In some embodiments, the projector optical axis of the projector unit is substantially parallel with the longitudinal axis of the scanning device. In other embodiments, the projector optical axis of the scan unit defines an angle, such as at least 45° or at least 75°, with the longitudinal axis of the scanning device. In other embodiments, the projector optical axis of the projector unit is substantially orthogonal to the longitudinal axis of the scanning device.

### Camera unit

A camera unit may be understood herein as a device for capturing a 2D image of the dental object. Each camera unit may comprise an image sensor for generating an image based on incoming light e.g. received from the illuminated dental object. As an example, the image sensor may be an electronic image sensor such as a charge-coupled device (CCD) or an active-pixel sensor (CMOS sensor). In some embodiments, the image sensor is a global shutter sensor configured to expose the entire image area (all pixels) simultaneously and generate an image in a single point in time. The image sensor may have an image frame rate of at least 30 frames per second, such as at least 60 frames per second, or even at least 90 frames per second.

The image sensor(s) may comprise an array of pixels, wherein each pixel is associated with a corresponding camera ray. Similarly, each image, within the set of images, may be composed of an array of pixels, wherein each pixel comprises a pixel color defined by one or more color channels. The array of pixels may be a two-dimensional (2D) array. In some embodiments, the image sensor is a CMOS sensor comprising an analog-to-digital converter (ADC) for each column of pixels, making conversion time significantly faster and allowing each camera unit to benefit from greater speed. Each image sensor may define an image plane, which may be understood as the plane that contains the object's projected image. Each image obtained by the image sensor(s) may comprise a plurality of image features, wherein each image feature originates from a pattern feature of the projected pattern. In some embodiments, one or more of the camera units comprise a light field camera. Preferably, each camera unit defines a camera optical axis. The camera units may further comprise one or more focus lenses for focusing light.

In some embodiments, the image sensor is a monochrome image sensor, wherein each pixel is associated with a single color channel, e.g. is a grayscale color channel, wherein the value of each pixel represents only an amount of light. In other embodiments, the image sensor is a color image sensor or an image sensor comprising a color filter array on the array of pixels. As an example, the color filter array may be a Bayer filter employing an arrangement of four color filters: Red (R), Green (G), Green (G), and Blue (B). The Bayer filter may also be referred to as an RGGB filter. When utilizing the image sensor data, color pixels may be combined to monochrome pixels of 2 x 2 color pixels for 3D depth reconstruction. In this case, the resolution of the 3D depth reconstruction is only half the resolution of the image sensor in each direction. When obtaining texture (color) images the full native resolution is preferably utilized (with color filtered pixels).

In accordance with some embodiments, the projector optical axis and the camera optical axis of at least one camera unit define a camera-projector angle of approximately 5 to 15 degrees, preferably 5 to 10 degrees, even more preferably 8 to 10 degrees. In some embodiments, the camera units are defocused at the opening of the probe of the scanning device and/or at the surface of an optical window in said probe. In some embodiments of the scanning device, the camera units and projector unit of a given scan unit are focused at the same distance. In some embodiments, each camera unit has a field of view of 50-115 degrees, such as 65-100 degrees, or 80-90 degrees.

### Processor

In accordance with some embodiments, the scanning device comprises one or more processors selected from the group of: central processing units (CPU), accelerators (offload engines), generalpurpose microprocessors, graphics processing units (GPU), neural processing units (NPU), application-specific integrated circuits (ASIC), field-programmable gate arrays (FPGA), dedicated logic circuitry, dedicated artificial intelligence processor units, or combinations thereof.

The scanning device may further comprise computer memory for storing instructions, which when executed, causes the processor(s) to carry out the step of determining image features in the set of images. The computer memory may further store instructions, which when executed, causes the processor(s) to carry out the step of generating a digital representation of a three-dimensional (3D) object. In general, the processor(s) may be configured to perform any of the disclosed computer-implemented methods herein, either fully or in part, e.g. such that some processor(s) perform some method steps and other processors perform other method steps, when executed.

The processor(s) may both be located on the scanning device. Alternatively, the processor(s), or a sub-set of the processor(s), may be located on a computer system as described herein. As an example, a first processor may be configured to determine image features in the images, and subsequently provide data related to the determined image features to a second processor. The data may comprise image feature coordinates as well as other attributes such as a camera index or other predefined properties of the image features.

### Computer system

A computer system may be understood as an electronic processing device for carrying out sequences of arithmetic or logical operations. In the present context, a computer system refers to one or more devices comprising at least one processor, such as a central processing unit (CPU), along with some type of computer memory. Examples of computer systems falling within this definition include desktop computers, laptop computers, computer clusters, servers, cloud computers, quantum computers, mobile devices such as smartphones and tablet computers, and/or combinations thereof.

The computer system may comprise hardware such as one or more central processing units (CPU), graphics processing units (GPU), and computer memory such as random-access memory (RAM) or read-only memory (ROM). The computer system may comprise a CPU, which is configured to read and execute instructions stored in the computer memory e.g. in the form of random-access memory. The computer memory is configured to store instructions for execution by the CPU and data used by those instructions. As an example, the memory may store instructions, which when executed by the CPU, cause the computer system to perform, wholly or partly, any of the computer-implemented methods disclosed herein. The computer system may further comprise a graphics processing unit (GPU). The GPU may be configured to perform a variety of tasks such as video decoding and encoding, rendering of the digital representation, and other image processing tasks.

The computer system may further comprise non-volatile storage in the form of a hard disc drive. The computer system preferably further comprises an I/O interface configured to connect peripheral devices used in connection with the computer system. More particularly, a display may be connected and configured to display output from the computer system. The display may for example display a 2D rendering of the generated digital 3D representation. Input devices may also be connected to the I/O interface. Examples of such input devices include a keyboard and a mouse, which allow user interaction with the computer system. A network interface may further be part of the computer system in order to allow it to be connected to an appropriate computer network so as to receive and transmit data (e.g. scan data, sub-scans, and/or images) from and to other computing devices. The CPU, volatile memory, hard disc drive, I/O interface, and network interface, may be connected together by a bus.

The computer system is preferably configured for receiving data from the scanning device, either directly from the scanning device or via a computer network such as a wireless network. The data may comprise images, processed images, sub-scans, point clouds, sets of data points, or other types of data. The data may be transmitted/received using a wireless connection, a wired connection, and/or combinations thereof. In some embodiments, the computer system is configured for generating a digital representation of the dental object as described herein. In some embodiments, the computer system is configured for receiving data, such as sub-scans or point clouds, from the scanning device and then subsequently perform the steps of reconstruction and rendering a digital representation of the dental object. Rendering may be understood as the process of generating one or more images from three-dimensional data. The computer system may comprise computer memory for storing a computer program, said computer program comprising computer-executable instructions, which when executed, causes the computer system to carry out the method of generating a digital representation of the dental object.

### Obtaining 2D images

The method disclosed herein comprises the step of acquiring or obtaining one or more 2D images. The 2D images may be digital images, such as digital color images. The 2D images may be acquired by the scanning device disclosed herein, such as by an intraoral scanning device. Each camera unit may comprise an image sensor having an array of pixels. Each pixel may be associated with a corresponding camera ray in three-dimensional (3D) space originating from said pixel. Generally, a point located along a given camera ray corresponding to a given pixel will be imaged on the image sensor on said pixel which in turn is read out to generate an image pixel of a 2D image.

Each 2D image may be composed of an array of image pixels, such as a two-dimensional array of image pixels, corresponding to the array of pixels on the image sensor(s). Each image pixel may comprise a pixel color defined by one or more color channels. An example of a single color channel is a grayscale color channel, wherein the value of each pixel represents only an amount of light, thereby carrying intensity information. Thus, the images within the set of images may be grayscale images. Another example of a single color channel is red, green, or blue. Thus, the presently disclosed method is not limited to using pixel color information, but may instead utilize pixel intensity information.

The scanning system may be configured to continuously acquire/obtaining 2D images with a predetermined framerate during a scanning session, wherein one or more objects, such as the teeth of a patient, is scanned using an intraoral scanning device.

### Generating point cloud data

A point cloud is a discrete set of data points in space. The points may represent a 3D shape or object, in this case the dental object. Each point position has its set of Cartesian coordinates (X, Y, Z). Points may contain data other than position such as RGB colors, normal, timestamp, and others. As disclosed above, several principles for extracting depth information from one or more 2D images are known, e.g. triangulation or focus principles. When the 2D image(s) have been obtained depth information is extracted to generate a depth images, wherein the image pixels are assigned a depth, Z, value, effectively converting the 2D image(s), or a processed version of the 2D image(s), from 2D information into 3D.

When scanning a dental object using a scanning device, the captured point clouds resulting from multiple 2D images each contain snippets of the scene acquired at different times and/or from different positions, which requires alignment to generate a full map of the scanned dental object. This process termed point set registration, or simply registration or stitching, aligns point clouds obtained from different 2D images with each other to bring them into a common coordinate system, which generates the final point cloud data. The Iterative closest point, ICP, algorithm may be used to align two point clouds that have an overlap between them and are separated by a rigid transform.

### Surface sections

In general, a scanned feature may be resolved in greater detail the more polygons, i.e. greater resolution, is used to represent its surface. However, greater detail only translates into better accuracy if the scanned object had fine features to begin with. A dental object with scarce or coarse surface features, e.g. flat surfaces and/or largely homogenous coloring, may thus be sufficiently represented by fewer polygons without sacrificing the accuracy of the final 3D representation. A dental object with fine surface features, e.g. sharp edges, textured/rough surfaces, grooves, etc. and/or diverse coloring, on the other hand may benefit from being represented by more polygons, i.e. at a higher resolution, as this allows the mesh to show the fine details.

Dental objects are, however, rarely composed entirely of coarse or fine features, but rather mostly a combination of the two. Therefore, according to the invention, the generation of the mesh may advantageously comprise dividing the scan data into a plurality of different surface sections, whereby each individual surface section may be processed according to the requirements of the features present at that part of the dental object. As an example, a dental object may be the teeth of a patient's mandibular jaw, comprising a restoration site. This may be divided into multiple surface sections, where surface sections which are rich in detail, e.g. surface sections comprising the restoration site or occlusal surfaces, can be processed at a higher resolution, while surface sections with less detail, e.g. side faces of teeth and gingiva, can be processed at a lower resolution, whereby the final mesh will be a variable resolution mesh with high resolution in the surface sections where it is needed and low resolution in the surface sections where less polygons may suffice.

### Geometric information/data

In order to determine which resolution a particular surface section requires, geometric information is extracted from the 2D image(s) and/or from the point cloud data. The geometric information is indicative of a rate of change of one or more surface characteristic(s) or to put it in other terms, it provides information of how much change the dental object has at a given area and thus also how much detail the surface section corresponding to that area has.

The one or more surface characteristic(s) may comprise contour in which case the geometric information will be indicative of how much, or little, curvature the surface in the various surface section has. The contour may be estimated based on the distribution of the points of the point cloud data of a given surface section. A wide point spread may be indicative of a surface section with high curvature and/or a high number of sharp features, i.e. a high rate of change in contour, while a lower point spread may be indicative of a surface section with low curvature and/or less sharp features, low rate of change in contour.

The one or more surface characteristic(s) may comprise color in which case the geometric information will be indicative of how much color variation the surface in the various surface section has. The color may be estimated based on the 2D images and/or the point cloud data of a given surface section. A surface section with relatively high color variation will have a high rate of change in color, whereas a surface section with relatively low color variation will have a low rate of change in color.

### Determining mesh resolution

Having obtained the geometric information for the individual surface sections, a mesh resolution may be determined for each surface section based on the rate of change of surface characteristics, also referred to as surface features, of the respective surface section. As mentioned above, a high rate of change in a surface section will lead to a higher mesh resolution being determined, while a lower rate of change will lead to a lower mesh resolution being determined. Thereby, each surface section will be rendered at a mesh resolution suitable for the surface features in that surface section of the dental object, without needlessly spending processing power on rendering a surface section in an excessive mesh resolution. On top of needless processing power, this would also result in excessive storage / data transfer requirements

The mesh resolution may be selected from two or more fixed resolution levels, wherein each resolution level is associated with a range for the rate of change of one or more surface characteristic(s), i.e. a resolution level will be selected for a surface section if the rate of change of one or more surface characteristic(s) fall within the range associated with that resolution level. The two or more fixed resolution levels may comprise a first resolution level, e.g. about 45 polygons per square mm, and a second mesh resolution level, e.g. about 180 polygons per square mm. It may be determined to use the first resolution level for a surface section when the rate of change of one or more surface characteristic(s) fall within a first range and it may be determined to use the second resolution level for a surface section when the rate of change of one or more surface characteristic(s) fall within a second range, wherein a midpoint of the first range is lower than a midpoint of the second range. Alternatively, the mesh resolution may be selected from a continuous resolution range based on the geometric information.

### Generating mesh data

The points of the point cloud data are used to form mesh data comprising multiple polygons representing the surface of the scanned dental object. The polygons are connected by their common edges, i.e. sides, and vertices, i.e. corners. In a preferred embodiment, the polygons are triangles. Each triangle, and other polygons for that matter, has a face, i.e. the surface defined by its edges. For flat faces, such as the face for triangles, the face has a normal, also known as normal vector, which indicates the face's orientation in space. Polygons with more than three edges may have nonflat faces which do not have a unique normal vector, i.e. the normal vector depends on the location on the face. Methods such as Delaunay triangulation for generating a mesh from point cloud data are known and may be used for this purpose. Another method may be using Poisson reconstruction, and build a volumetric signed distance field from the 2D image(s) and/or point cloud, and then extract the initial mesh as a the iso-surface/contour of that signed distance field at zero value (using marching cubes method).

The number of vertices used in the mesh data will vary and depend on the mesh resolution determined for the individual surface sections. Hence, more vertices will be inserted into the mesh data in surface sections where the geometric information indicates a higher rate of change in the one or more surface characteristics so that the mesh may accurately represent the surface features in these surface sections. Similarly, less vertices will be inserted into the mesh data in surface sections where the geometric information indicates a smaller rate of change in the one or more surface characteristics so that the processing power will not be needlessly spend rendering these surface sections at an excessive resolution.

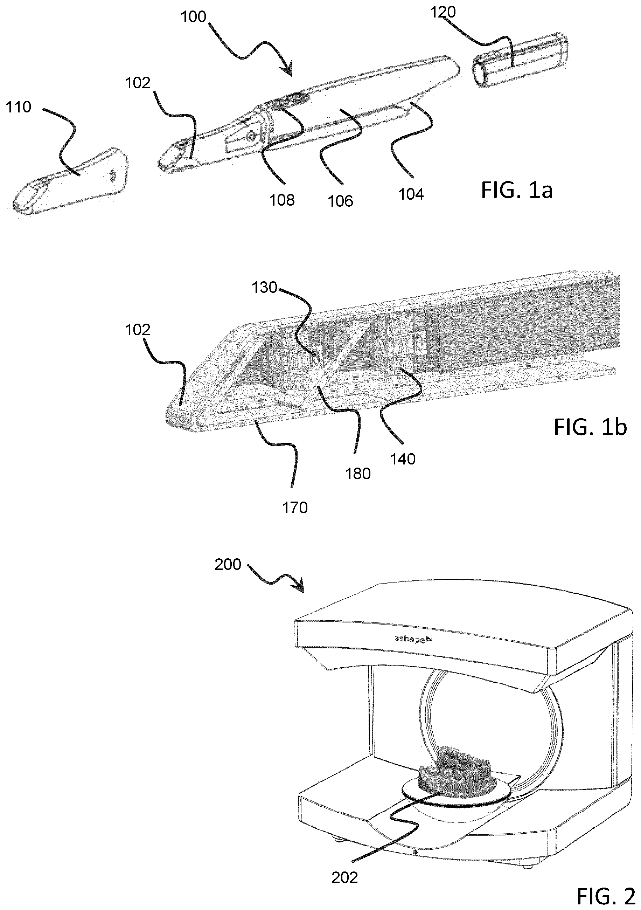

FIG. 1a illustrates an intraoral scanner 100 used in the scanning system 700 or method of the invention. The intraoral scanner 100 comprises a distal end 102 configured to be at least partially inserted into the patient's mouth. The distal end 102 comprises a scanner window 150 through which light can be projected onto the dental object 202, 402 to be scanned and images of the illuminated object can be captured. The distal end 102 is further configured for having a sleeve 110 releasably attached over it. The sleeve 110 is provided as a hygienic barrier and may be changed between patients to avoid contamination between patients. The sleeve 110 comprises a sleeve window which, when the sleeve 110 is attached onto the distal end 102, overlaps at least partially with the scanner window 150.

The intraoral scanner 100 also comprises a proximal end 104 opposite the distal end 102. The distal end 104 may comprise an opening configured for receiving and holding a battery 120, preferably a rechargeable battery, for powering the intraoral scanner 100. Alternatively, the battery 120 may be arranged inside the intraoral scanner 100, in which case the battery can be recharged through a power interface of the intraoral scanner 100.

Between the distal end 102 and the proximal end 104, the intraoral scanner 100 comprises a scanner body 106 configured for being held by a user, e.g. a dentist or a dental technician. For the user to control the intraoral scanner 100 during scanning sessions, the intraoral scanner 100 comprises a scanner interface 108, which may comprise one or more push buttons and/or one or more touch interfaces.

FIG. 1b illustrates a cross-sectional view of an intraoral scanner 100 used in the scanning system 700 or method of the invention. The shown intraoral scanner 100 comprises multiple camera units 140, e.g. four or eight camera units 140, each configured for acquiring 2D images of the object 202, 402. By having multiple camera units 140, the intraoral scanner 100 may acquire multiple 2D images substantially simultaneously. The shown intraoral scanner 100 comprises multiple projector units 130 configured for projecting light, e.g. patterned light, onto the object 202, 402. Both the camera units 140 and the projector units 150 are arranged such that their optical axes are parallel or slightly angled to a longitudinal axis of the intraoral scanner 100. To allow the camera units 140 and the projector units 150 to view/illuminate the object 202, 402, mirrors 160 are arranged in their optical path to direct their optical path towards the scanner window 150.

FIG. 2 illustrates a lab scanner 200 used in the scanning system or method of the invention. Where intraoral scanners 100 are usually used in dentist clinics, lab scanners are mostly used in dental laboratories which manufacture or customize a variety of products for dentist clinics. The lab scanner 200 is configured for scanning a plastic or gypsum model 202 molded from the subject's teeth, which is arranged in a scan volume of the lab scanner 200.

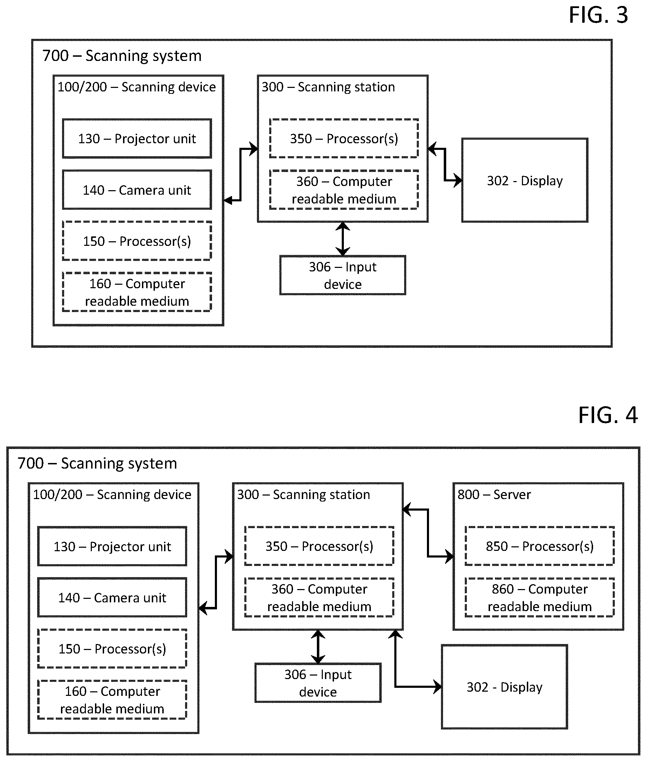

FIG. 3 shows a block diagram of a scanning system 700 of the invention. The scanning system 700 comprises a scanning device, which may be an intraoral scanner 100 or a lab scanner 200, e.g. the ones illustrated in FIG. 1 and FIG. 2. The scanning device 100; 200 comprises one or more projector unit(s) 130 configured for illuminating the dental object 202; 402, and one or more camera unit(s) 140 configured for capturing 2D images of the illuminated dental object 202; 402.

The scanning device 100; 200 may, at least during scanning sessions, be operationally connected to a scanning station 300, such as a laptop or a desktop computer. The scanning station 300 comprises an input device 306, such as a mouse, touchpad, and/or keyboard, which may be used by the user to control parts of the scanning process and/or the subsequent processing of the 2D images to generate the 3D representation. The scanning station 300 comprises a display 302, which may be used for displaying the 3D representation and/or for providing a viewfinder to help the user navigate the intraoral scanner 100 and guide them so that they can arrange the intraoral scanner 100 relative to the dental object 402.

To process the one or more 2D images captured during a scanning session, the scanning system comprises one or more processor(s) 150, 350. The one or more processor(s) 150, 350 may be located in the scanning device 100; 200 and/or in the scanning station 300. The scanning system 700 further comprises a computer readable medium 160, 360 comprising instructions which, when executed by the scanning system cause the scanning device 100, 200 and/or the scanning station 300 to carry out the method of the invention. The computer readable medium 160, 360 may be located in the scanning device 100; 200 and/or in the scanning station 300.

FIG. 4 shows a block diagram of another scanning system 700 of the invention. The scanning system 700 of FIG. 4 differs from the of FIG. 3 in that it further comprises a server 800 operationally connected to the scanning station 300. The server 700 may be located locally, i.e. close to the scanning station 300, and be operationally connected to the scanning station 300 via a local area network, LAN. The server 700 may be located remotely, i.e. far the scanning station 300, and be operationally connected to the scanning station 300 via a wide area network, WAN, e.g. the internet. The server 800 may be configured for executing at least part of the method of the invention, e.g. some or all of the steps related to data processing. To this end, the server 800 comprises at least some, if not all, of the one or more processor(s) 150, 350, 850, and optionally also part of, or all of, the computer readable medium 160, 360, 860.

In general, the one or more processor(s) 150, 350, 850 and/or the computer readable medium 160, 360, 860 may reside in one of the scanning device 100, 200, the scanning station 300, or the server 800, or they may be distributed amongst two or three of these devices in any combination.

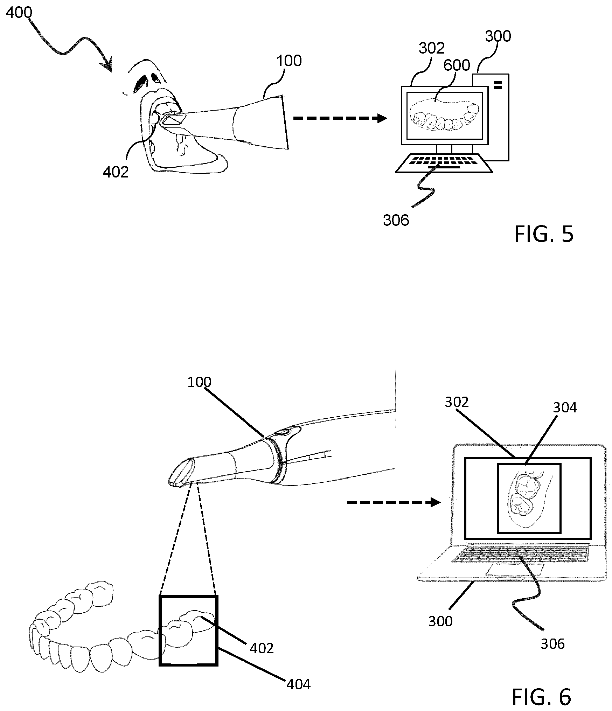

FIGS. 5 and 6 illustrate a scanning session with a scanning system of the invention comprising an intraoral scanner 100. During the scanning session, the dental practitioner inserts the distal end 102 into the subject's 400 mouth with the window towards the dental object 402. The dental object 402 may be a single tooth or preparation site or it may be a full dental arch. The intraoral scanner 100 is then moved around to capture 2D images of the object from multiple viewpoints.

During the scanning session, the intraoral scanner is operationally connected to a scanning station 300 comprising a display 302. While scanning, the display 302 may be used for displaying a viewfinder 304 showing the current field of view 404 of the intraoral scanner 100 to help the dental practitioner navigate the intraoral scanner 100 inside the subject's 400 mouth. After scanning, the display 302 may be used for displaying the 3D representation for the dental practitioner to examine.

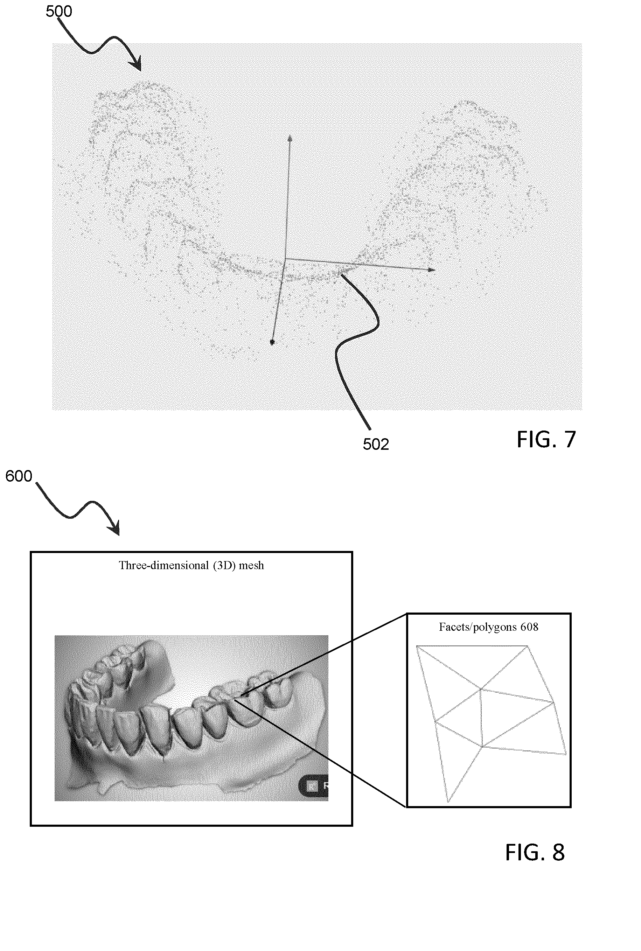

FIG. 7 shows a visualization of point cloud data 500 comprising multiple points 502, representing the volume of the dental object 202, 402. The point cloud data 500 is generated by extracting depth information from the one or more 2D images obtained during the scanning session. The depth information is extracted based on the working principle of the scanning device 100, 200.

Triangulation based scanning systems 700 determines a point in 3D space given its projections onto two, or more, camera pixel(s) and or projector pixel(s), while focus based scanning systems 700 determine depth by sweeping a lens linearly and determining the focus distance at which a given point in 3D space is in focus based on the position of the lens.

Point cloud data 500 gathered from multiple vantage points, i.e. position and/or orientation of the scanner 100, 200 relative to the dental object 202, 402, is registered into a common coordinate system. The registration may be performed using an Iterative Closest Point, ICP, algorithm, which keeps one point cloud, the reference or target, fixed, while transforming the other, the source, to best match the reference. The transformation, i.e. translation and/or rotation, is iteratively estimated in order to minimize an error value, typically the sum of squared differences between the coordinates of the matched pairs. In the shown figure, the final point cloud data represents dental object 202, 402 which is an entire dental arch of a patient's 400 mandibular jaw.

FIG. 8 shows a 3D representation 600 of a dental object 202, 402 which is an entire dental arch of a patient's 400 mandibular jaw. The 3D representation 600 comprises mesh data comprising multiple polygons 608, said mesh data representing the surface of the scanned dental object 202, 402. For 3D models, triangular polygons are advantageous for multiple reasons.

Triangles are always planar, meaning they lie flat in their respective plane. This simplifies many mathematical computations, such as rendering, shading, and collision detection. Linear interpolation across a triangle is straightforward, which is crucial for shading techniques like Gouraud shading and texture mapping.

Any surface, regardless of its complexity or curvature, can be approximated by a sufficient number of triangles. This makes triangles highly versatile for modeling a wide range of shapes. Triangular meshes allow for varying levels of detail. A complex surface can be represented with a high number of small triangles for detailed regions and fewer, larger triangles for less detailed regions. A triangular mesh thus offers a high degree of geometric flexibility.

Graphics hardware (GPUs) is optimized for processing triangles. Operations like transformations, lighting calculations, and rasterization are highly efficient with triangles. Algorithms for mesh operations, such as subdivision, simplification, and morphing, are well-developed and efficient for triangular meshes. Further, many 3D graphics standards and file formats (e.g., STL, OBJ, and 3DS) natively support triangular meshes, ensuring broad compatibility across different software and platforms. Most 3D modeling and animation software is designed to work with triangular meshes, providing robust tools for editing and manipulating these meshes. A triangular mesh is therefore more compatible with various hardware/software platforms which the user may use for working with the 3D representation 600.

Triangles ensure consistent behavior in various operations. For example, a polygon 608 with more sides can be non-planar or concave, complicating calculations. Triangular meshes can be easily subdivided to create finer details. Subdivision algorithms like Loop subdivision work seamlessly with triangles. Reducing the number of triangles in a mesh while preserving overall shape and appearance is a well-studied problem, with many effective algorithms available. In summary, triangular meshes offer a balance of mathematical simplicity, geometric flexibility, and computational efficiency, making them an ideal choice for representing 3D objects.

As will be described in greater detail below, the number of polygons 608 used for various surface sections of the mesh data will depend on the regional level of detail in the respective surface section as indicated by the geometric information associated with that surface section.

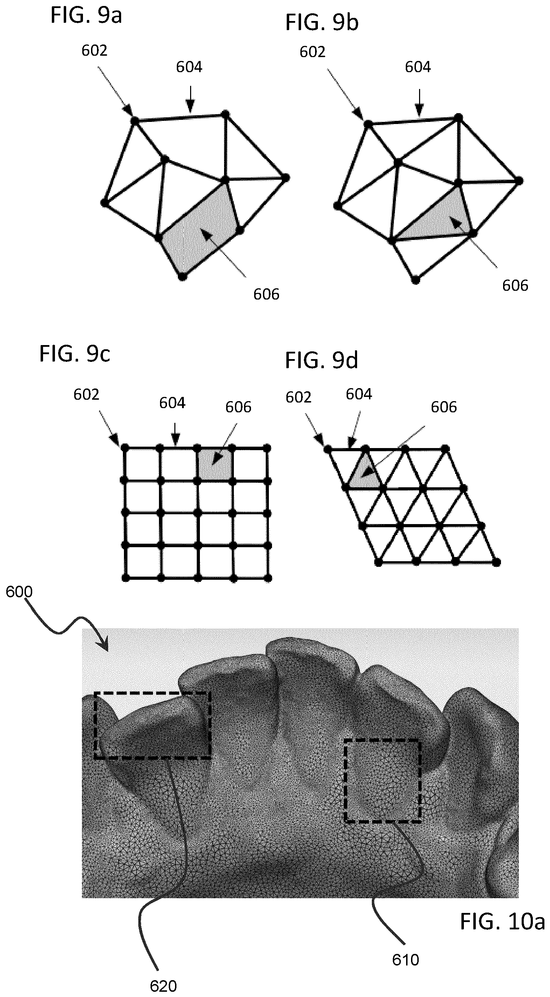

FIG. 9a-9d show examples of meshes according to various embodiments. As noted above, the mesh data/meshes comprises multiple polygons 608. The polygons 608 are defined by their corners, i.e. vertices 602, and their edges 604. The area enclosed by a number of edges depending on the type of polygon 608 applied, e.g. three for triangles, is referred to as the face 606. In various embodiments, meshes may differ in several ways. Faces 606 may have a consistent number of vertices, or different numbers of vertices. Edges may be of consistent length, or of different lengths. Non-boundary vertices may have different numbers of neighboring vertices, or a consistent number of neighboring vertices.

FIG. 9a is a mesh with faces with different number of vertices 602, edges 604 of different lengths, and non-boundary vertices 602 with different numbers of neighboring vertices 602, according to an embodiment. FIG. 9b is a mesh with faces 606 with a consistent number of vertices 602, edges 604 of different lengths, and non-boundary vertices 602 with different numbers of neighboring vertices 602, according to an embodiment.

FIG. 9c is a mesh with faces 606 with a consistent number of vertices 602, edges 604 of consistent length, and non-boundary vertices 602 with a consistent number of neighboring vertices 602, according to an embodiment. FIG. 9d is a mesh with faces 606 with a consistent number of vertices 602, edges 602 of consistent length, and non-boundary vertices 602 with a consistent number of neighboring vertices 602, according to an embodiment. Different meshes serve different functions, but in representing 3D objects, meshes with triangular faces 606 such as FIG. 9b are often used for the reasons given above.

Each polygon 608 may be assigned a color value so that the mesh data not only represents the shape of the scanned dental object 202, 402 but also its color. This is advantageous when deriving dental prosthetics, e.g. bridges, crowns and/or veneers, from the 3D representation 600 as the prosthetic(s) can then be color matched to the patient's other teeth, e.g. adjacent teeth of the restoration site where the prosthetic is going to be arranged.

FIG. 10a-c show an example of a 3D representation 600 generated according to the invention. The 3D representation 600 represents a dental object 202, 402 being a set of teeth and gingiva. The mesh data used for the 3D representation comprises multiple triangles, wherein the resolution, i.e. the number of polygons 608, used for various surface sections of the mesh varies depending on the level of detail.

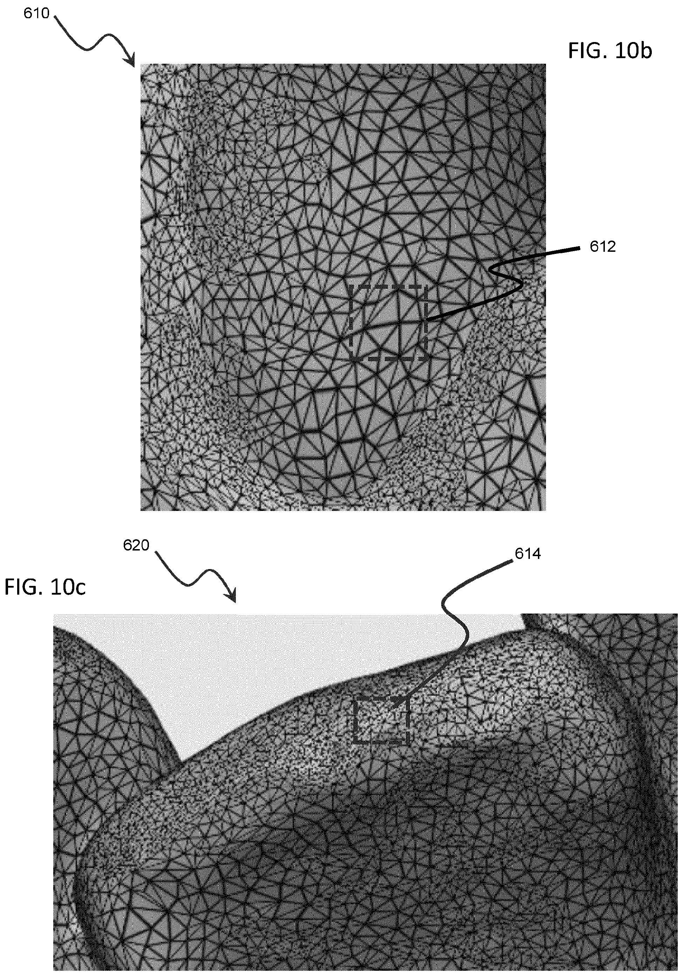

FIG. 10b shows a first region 610 of the mesh data. The first region 610 contains a lingual surface of an incisor tooth which is a relatively flat surface where the level of detail/changes in the surface characteristics is relatively low. Accordingly, the resolution determined suitable for the surface sections 612 of this region 610 is also low. The resulting mesh in the surface sections 612 of this region 610 therefore comprise fewer polygons 608 per area as this is sufficient to resolve the relative coarse features of the first region 610 without spending excessive processing power on generating superfluous polygons 608. FIG. 10c shows a second region 620 of the mesh data. The second region 620 contains an incisal surface of an incisor tooth which is a type of surface with high curvature and thus the level of detail in the surface characteristics is relatively high. Accordingly, the resolution determined suitable for the surface sections of this region 620 is also high. The resulting mesh in the surface sections 614 of this region 620 therefore comprise more polygons 608 per area which allows the mesh to accurately represent the fine features. FIG. 10c and 10b have been magnified the same amount for easy comparison of the two. By comparing the two, one can easily see that the relatively flat lingual surface of the tooth located in the first region 610 has been resolved at a lower resolution resulting in a lower density of polygons 608 than the incisal surface located in the second region 620.

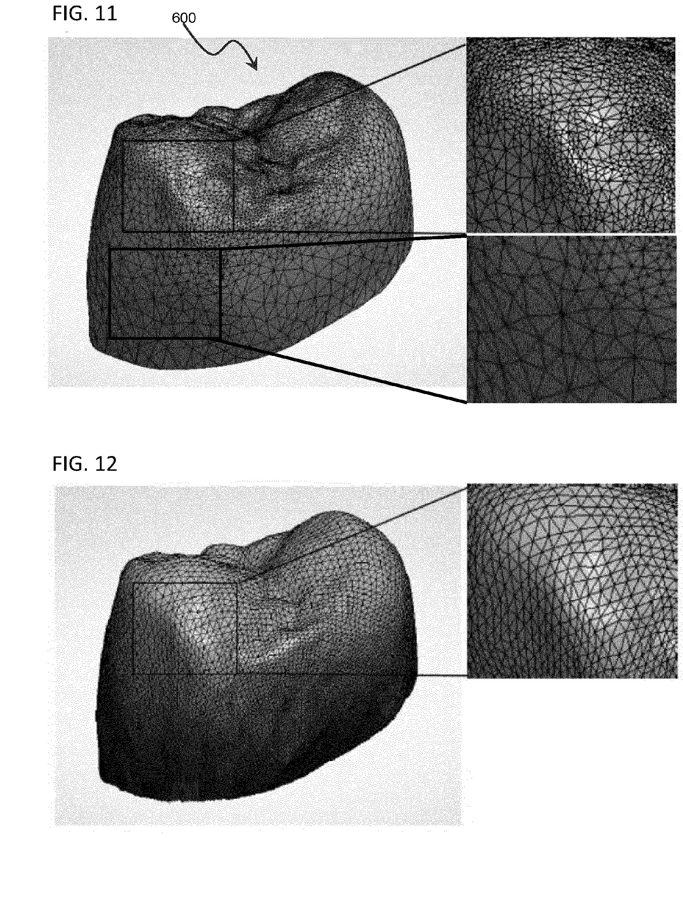

FIG. 11 shows another 3D representation 600 of a dental object 202, 402 which is a molar tooth of a patient 400. As can be seen in the zoom-ins on the right, the relatively flat side face has been determined to have a low rate of change in surface characteristics, in this case a low rate of change in contour, and as a result the mesh resolutions determined to be suitable for these surface sections have been determined to be low. The occlusal surface on the other hand, has been determined to have a high rate of change in surface characteristics, in this case a high rate of change in contour, and as a result the mesh resolutions determined to be suitable for these surface sections have been determined to be high.

To determine the mesh resolution required for a surface section, geometric information for that surface section must first be obtained. The geometric information is indicative of a rate of change of one or more surface characteristic(s), such as a rate of change in contour and/or color, and therefore provides the information needed to determine the mesh resolution required for the mesh of the 3D representation 600 to accurately represent the surface of the dental object 202, 402 in this surface section.

The geometric information is obtained from the one or more 2D images and/or the point cloud data 500 depending on which surface characteristics are needed. If color information is required, this may be obtained from color information in the 2D images and/or color information in the point cloud data extracted from the 2D image(s). If contour information is required, this may be obtained from the point cloud data 500. Contour information may be obtained by comparing the surface gradient at neighboring points, e.g. by performing ray tracing to determine how light from the one or more projector units 130 was reflected at a point of the point cloud data and comparing it to how light was reflected of its neighboring points, or by determining how closely or widely distributed point are in a surface section, i.e. points that are widely distributed indicates a high degree of change in the surface contour, while point that are closely distributed indicates a low degree of change in the surface contour.

FIG. 12 illustrates an initial mesh generated comprising multiple initial polygons based on the point cloud data 500. The initial mesh is generated before the mesh of the 3D representation at a preset initial resolution. The initial mesh may be used to obtain at least part of the geometric information. This may be done by deriving an initial mesh to data fit error metric indicating how well an initial polygon fits the points of the point cloud date 500 used to generate it. If the points are highly distributed around the initial polygon the geometric information will show that it has a bad fit error, and if the points are closely distributed to the initial polygon the geometric information will show that it has a good fit error. A bad fit error will mean that a higher mesh resolution will be preferential, while a good fit error will mean that a lower mesh resolution will be sufficient.

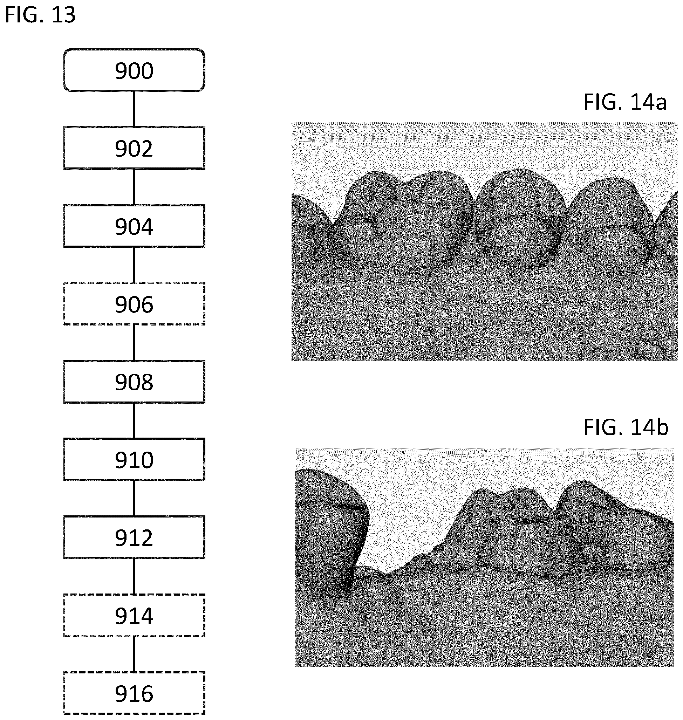

FIG. 13 shows a flow chart of the computer implemented method of the invention. The method starts with the user initiating a scanning session 900. After initiation 900 the step of acquiring/obtaining one or more 2D images 902 is performed. The step of acquiring/obtaining one or more 2D images 902 may be performed using an intraoral scanner 100 or a lab scanner 200 as described above.

After the step of acquiring/obtaining one or more 2D images 902, the step of generating point cloud data 904 is performed. The point cloud data 500 comprises multiple points representing surface points of the object 202, 402, said points being extracted from the one or more 2D images or data derived thereof. If multiple 2D images have been obtained from different viewpoints, i.e. different positions and/or orientation of the scanning device 100, 200 relative to the dental object 202, 402, generating point cloud data 904 may comprise registering points derived from different 2D images into a common coordinate system. The method may then comprise the step of generating an initial mesh 906 based on the point cloud data 500. The initial mesh is generated at a preset initial resolution and comprises multiple initial polygons.

The method then comprises the step of obtaining geometric information 908. The geometric information may be based on the one or more 2D image(s), the point cloud data 500, and/or the initial mesh. As described above, the geometric information is indicative of a rate of change of one or more surface characteristic(s) in multiple surface sections of the object 202, 402 and is thus indicative of how much or little surface details are present in each of the surface sections, which in turn indicates which mesh resolution is required to accurately represent each surface section of the dental object 202, 402.

The method then comprises the step of determining a mesh resolution 910 for each surface section based on the geometric information. If the geometric information indicates that a surface section is rich in surface detail, e.g. has a high color variation of a complex contour, a higher mesh resolution will be determined to be required. If, on the other hand, the geometric information indicates that a surface section is scarce in surface detail, e.g. has a low color variation of a relatively flat contour, a higher mesh resolution will be determined to be sufficient. Having determined a mesh resolution for each surface section, the method proceeds to the step of generating mesh data 912 comprising multiple polygons 608 representing the surface of the object 202, 402. How many polygons 608 are generated for a surface section depends on the mesh resolution determined to be needed for that surface section in the previous step 910.

The method may then comprise the step of assigning a color value to each polygon 914. The color value may be based on the one or more 2D image(s), and may be determined based on an average color of the surface of the object 202, 402 in the area associated with the respective polygon 608. The mesh resulting from step 912, and optionally also step 914, will provide the 3D representation of the dental object 202, 402. Finally, the method may comprise the step of outputting the 3D representation 916. Outputting the 3D representation 916 may be performed using a display 302 of the scanning system 700, thereby allowing the user to inspect the dental object 202, 402 and determine a dental health status of the patient 400.

FIG. 14a and 14b show further examples of 3D representations generated by the method of the invention. As was the case in FIG. 10a-c the surface sections at the occlusal surfaces and the edges connecting the occlusal surfaces to the sides of the teeth have surface characteristics with a high rate of change, e.g. a high rate of change in contour, and therefore require a higher mesh resolution to properly show these surface characteristics. The surface sections of the side faces and gingiva on the other hand have surface characteristics, e.g. contour, that changes less and therefore require a lower mesh resolution to adequately show these surface characteristics. According to the invention, the mesh resolutions has been determined adaptively to generate portions of the mesh at a higher resolution where needed and portions of the mesh at a lower resolution where the lower resolution suffice.

### Further details

Embodiments of the invention are disclosed in the following list of enumerated items:
1. A computer-implemented method for generating a digital 3D representation of a dental object, the method comprising the steps of:
   - obtaining one or more 2D image(s) of the object;
   - generating, based on the one or more 2D image(s), point cloud data, wherein the point cloud data comprises multiple points representing surface points of the object; and
   - generating, based on the point cloud data, mesh data comprising multiple polygons representing the surface of the object.
2. The method of item 1, wherein the step of generating mesh data comprises:
   o obtaining geometric information based on the one or more 2D image(s), wherein the geometric information is indicative of a rate of change of one or more surface characteristic(s) in multiple surface sections of the object.
3. The method of item 2, wherein the step of generating mesh data comprises:
   o determining a mesh resolution for each surface section based on the geometric information.
4. The method of item 3, wherein the step of generating mesh data comprises:
   o generating a mesh for each surface section with resolution determined for the respective surface section.
5. The method of any of items 2-4, wherein at least part of the geometric information relating to a respective surface section is based on a distribution of the points of the point cloud data corresponding to that surface section.
6. The method of any of items 2-5, wherein at least part of the geometric information relating to a respective surface section is based on performing raytracing on light reflected at the points of the point cloud data corresponding to that surface section.
7. The method of items 5 or 6, wherein the geometric information comprises information indicative of a rate of change of a contour in the surface sections.
8. The method of any of items 2-7, wherein at least part of the geometric information relating to a respective surface section is based on color data corresponding to that surface section.
9. The method of item 8, wherein the geometric information comprises information indicative of a rate of change of color in the surface sections.
10. The method of any of the previous items, wherein the step of obtaining one or more 2D images of the object comprises obtaining multiple 2D images of the object.
11. The method of item 10, wherein the step of generating point cloud data comprises solving a correspondence problem to ascertain which parts of a first image of the multiple 2D images correspond to which parts of second image of the multiple 2D images.
12. The method of items 10 or 11, wherein the step of generating point cloud data comprises registering points of the multiple points obtained from each respective 2D image into a common coordinate system.
13. The method of any of the previous items, wherein the step of generating mesh data comprises assigning a color value to each polygon based on the one or more 2D image(s).
14. The method of any of the previous items, wherein the step of obtaining one or more 2D image(s) comprises projecting light onto the dental object.
15. The method of item 14, wherein the light is projected in a pattern.
16. The method of item 15, wherein the projected pattern is time static.
17. The method of item 15, wherein the projected pattern is time variable.
18. The method of any of the previous items, wherein the step of obtaining one or more 2D image(s) of the object is performed with an intraoral scanner.
19. The method of any of items 1-17, wherein the step of obtaining one or more 2D image(s) of the object is performed with a lab scanner.
20. The method of items 18 or 19, wherein the step of generating point cloud data comprises performing a first transformation to generate a dataset of coordinates of at least part of the object in a scanning-device-coordinate-system.
21. The method of item 20, wherein the step of generating point cloud data comprises performing a second transformation on the dataset of coordinates of at least part of the object in a scanning-device-coordinate-system to generate at least part of point cloud data in a real-world-coordinate-system.
22. The method of any of the previous items, wherein the step of generating mesh data further comprises:
   o generating an initial mesh based on the point cloud data, wherein the initial mesh comprises multiple initial polygons.
23. The method of item 22, wherein the step of generating mesh data is based on the initial mesh.
24. The method of items 22 or 23, wherein the step of obtaining geometric information for a surface section comprises:
   o comparing normal vectors of adjacent initial polygons within a surface section to obtain information on a rate of change in contour of the surface section.
25. A computer program product comprising instructions which, when the program is executed by a computer, causes the computer to carry out the method of any of the previous items.
26. A non-transitory computer readable medium comprising instructions which, when executed by a computer, cause the computer to carry out the method of any of items x-x.
27. A scanning system for generating a digital 3D representation of a dental object, the system comprising:
   - a scanning device comprising:
      ∘ one or more projector units configured for projecting light onto the object, and
      ∘ one or more camera units configured for obtaining one or more 2D image(s) of the object;
   - one or more processor(s), wherein the processor(s) are configured for:
      ∘ generating, based on the one or more sets of 2D images, point cloud data, wherein the point cloud data comprises multiple points representing a surface points of the object; and
      o generating, based on the point cloud data, mesh data comprising multiple polygons representing the surface of the object.
28. The scanning system of item 27, wherein the processor(s) are configured for:
   o obtaining geometric information based on the one or more 2D image(s), wherein the geometric information is indicative of a rate of change of one or more surface characteristic(s) in multiple surface sections of the object.
29. The scanning system of item 28, wherein the processor(s) are configured for:
   o determining a mesh resolution for each surface section based on the geometric information.
30. The scanning system of item 29, wherein the processor(s) are configured for:
   o generating a mesh for each surface section with resolution determined for the respective surface section.
31. The scanning system of any of items 28-30, wherein at least part of the geometric information relating to a respective surface section is based on a distribution of the points of the point cloud data corresponding to that surface section.
32. The scanning system of any of items 28-31, wherein at least part of the geometric information relating to a respective surface section is based on performing raytracing on light reflected at the points of the point cloud data corresponding to that surface section.
33. The scanning system of items 31 or 32, wherein the geometric information comprises information indicative of a rate of change of a contour in the surface sections.
34. The scanning system of any of items 28-33, wherein at least part of the geometric information relating to a respective surface section is based on color data corresponding to that surface section.
35. The scanning system of item 34, wherein the geometric information comprises information indicative of a rate of change of color in the surface sections.
36. The scanning system of any of items 28-35, wherein the one or more camera units configured for obtaining multiple 2D images of the object.
37. The scanning system of item 36, wherein the processor(s) are configured for:
   o solving a correspondence problem to ascertain which parts of a first image of the multiple 2D images correspond to which parts of second image of the multiple 2D images.
38. The scanning system of items 36 or 37, wherein the processor(s) are configured for:
   o registering points of the multiple points obtained from each respective 2D image into a common coordinate system to generate the point cloud data.
39. The scanning system of any of items 28-38, wherein the processor(s) are configured for:
   o assigning a color value to each polygon based on the one or more 2D image(s).
40. The scanning system of any of items 28-39, wherein the light is projected in a pattern.
41. The scanning system of item 40, wherein the projected pattern is time static.
42. The scanning system of item 40, wherein the projected pattern is time variable.
43. The scanning system of any of items 28-42, wherein the scanning device is an intraoral scanner.
44. The scanning system of any of items 28-42, wherein the scanning device is a lab scanner.
45. The scanning system of any of items 28-44, wherein the processor(s) are configured for:
   o performing a first transformation to generate a dataset of coordinates of at least part of the object in a scanning-device-coordinate-system, when generating the point cloud data.
46. The scanning system of item 45, wherein the processor(s) are configured for:
   o performing a second transformation on the dataset of coordinates of at least part of the object in a scanning-device-coordinate-system to generate at least part of point cloud data in a real-world-coordinate-system, when generating point cloud data.
47. The scanning system of any of items 28-46, wherein the processor(s) are configured for:
   o generating an initial mesh based on the point cloud data, wherein the initial mesh comprises multiple initial polygons.
48. The scanning system of item 47, wherein the processor(s) are configured for:
   o generating the mesh data based on the initial mesh.
49. The scanning system of items 47 or 48, wherein the processor(s) are configured for:
   o comparing normal vectors of adjacent initial polygons within a surface section to obtain information on a rate of change in contour of the surface section.

**List of references**

| | | | |
|---|---|---|---|
| 100 | Intraoral scanner | 500 | Point cloud data/point cloud |
| 102 | Distal end | 502 | Point |
| 104 | Proximal end | 600 | Mesh data/mesh |
| 106 | Scanner body | 602 | Vertex/vertices |
| 108 | Scanner interface | 604 | Edge(s) |
| 110 | Sleeve | 606 | Face(s) |
| 120 | Battery | 608 | Polygon(s) |
| 130 | Projector unit | 610 | First region |
| 140 | Camera unit | 612 | Surface section |
| 150 | Processor | 614 | Surface section |
| 160 | Computer readable medium | 620 | Second region |
| 170 | Scanner window | 700 | Scanning system |
| 180 | Mirror | 800 | Server |
| 200 | Lab scanner | 850 | Processor |
| 202 | Dental object | 860 | Computer readable medium |
| 300 | Scanning station | 900 | Initiating a scanning session |
| 302 | Display | 902 | Acquiring/obtaining one or more 2D images |
| 304 | Viewfinder | 904 | Generating point cloud data |
| 306 | Input device | 906 | Generating an initial mesh |
| 350 | Processor | 908 | Obtaining geometric information |
| 360 | Computer readable medium | 910 | Determining a mesh resolution |
| 400 | Subject/patient | 912 | Generating mesh data |
| 402 | Dental object | 914 | Assigning a color value to each polygon |
| 404 | Current field of view | 916 | Outputting the 3D representation |

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It is to be noted that the word "comprising" does not necessarily exclude the presence of other elements or steps than those listed. It is to be noted that the words "a" or "an" preceding an element do not exclude the presence of a plurality of such elements.

It should further be noted that any reference signs do not limit the scope of the claims, that the exemplary embodiments may be implemented at least in part by means of both hardware and software, and that several "means", "units" or "devices" may be represented by the same item of hardware.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects.

Although embodiments and features have been shown and described, it will be understood that they are not intended to limit the claimed invention, and it will be made obvious to those skilled in the art that various changes and modifications may be made without departing from the spirit and scope of the claimed invention. The specification and drawings are, accordingly to be regarded in an illustrative rather than restrictive sense. The claimed invention is intended to cover all alternatives, modifications, and equivalents.

## Claims

1. A computer-implemented method for generating a digital 3D representation of a dental object, the method comprising the steps of:
• obtaining one or more 2D image(s) of the object;
• generating, based on the one or more 2D image(s), point cloud data, wherein the point cloud data comprises multiple points representing surface points of the object; and
• generating, based on the point cloud data, mesh data comprising multiple polygons representing the surface of the object.
**CHARACTERIZED IN THAT** the step of generating mesh data comprises:
∘ obtaining geometric information based on the one or more 2D image(s), wherein the geometric information is indicative of a rate of change of one or more surface characteristic(s) in multiple surface sections of the object;
o determining a mesh resolution for each surface section based on the geometric information; and
o generating a mesh for each surface section with resolution determined for the respective surface section.

2. The method of claim 1, wherein at least part of the geometric information relating to a respective surface section is based on a distribution of the points of the point cloud data corresponding to that surface section.

3. The method of claims 1 or 2, wherein at least part of the geometric information relating to a respective surface section is based on performing raytracing on light reflected at the points of the point cloud data corresponding to that surface section.

4. The method of any of the previous claims, wherein the geometric information comprises information indicative of a rate of change of a contour in the surface sections.

5. The method of any of the previous claims, wherein at least part of the geometric information relating to a respective surface section is based on color data corresponding to that surface section.

6. The method of any of the previous claims, wherein the geometric information comprises information indicative of a rate of change of color in the surface sections.

7. The method of any of the previous items, wherein the step of generating mesh data comprises assigning a color value to each polygon based on the one or more 2D image(s).

8. The method of any of the previous items, wherein the one or more 2D image(s) of the object is obtained by an intraoral scanner.

9. The method of any of claims 1-7, wherein the one or more 2D image(s) of the object is obtained by a lab scanner.

10. The method of any of the previous claims, wherein the step of generating mesh data further comprises:
o generating an initial mesh based on the point cloud data, wherein the initial mesh comprises multiple initial polygons.

11. The method of claim 10, wherein the step of generating mesh data is based on the initial mesh.

12. The method of claims 10 or 11, wherein the step of obtaining geometric information for a surface section comprises:
o determining a fit error of each of the initial polygons with their adjacent points of the point cloud data.

13. The method of any of claims 10-12, wherein the step of obtaining geometric information for a surface section comprises:
o comparing normal vectors of adjacent initial polygons within a surface section to obtain information on a rate of change in contour of the surface section.

14. A computer program product comprising instructions which, when the program is executed by a computer, causes the computer to carry out the method of any of the previous claims.

15. A non-transitory computer readable medium comprising instructions which, when executed by a computer, cause the computer to carry out the method of any of claims 1-13.
